# FASCICULE DE BREVET EUROPEEN

(11) **EP 3 558 893 B1**
(45) Date de publication et mention de la délivrance du brevet: **21.10.2020**
(21) Numéro de dépôt: 17825576.6
(22) Date de dépôt: 14.12.2017
(51) Int. Cl.: C04B 35/111, C04B 35/486

(54) **PROCÉDÉ DE FABRICATION D'UN MATÉRIAU CÉRAMIQUE DE COULEUR ROUGE**
VERFAHREN ZUR HERSTELLUNG EINES ROTEN KERAMIKMATERIALS
METHOD FOR MANUFACTURING A RED CERAMIC MATERIAL

(30) Priorité: 20.12.2016 FR 1662951
(43) Date de publication de la demande: 30.10.2019
(73) Titulaire: Norimat, 31300 Toulouse (FR); Université Paul Sabatier Toulouse III, 31400 Toulouse (FR); Centre National de la Recherche Scientifique, 75016 Paris (FR)
(72) Inventeur: BEYNET, Yannick, 31300 Toulouse (FR); EPHERRE, Romain, 31000 Toulouse (FR); ANSART, Florence, 31670 Labège (FR); LENORMAND, Pascal, 31400 Toulouse (FR); ESTOURNES, Claude, 31370 Rieumes (FR)
(74) Mandataire: Ipside
(86) Numéro de dépôt international: PCT/FR2017/053590
(87) Numéro de publication internationale: WO 2018/115649

(56) Documents cités:
- WO-A1-2010/146311
- WO-A1-2011/120181
- CN-A- 104 261 842
- ADAMS ET AL: "A million tonnes in the global palette of coloured mineral pigments", FOCUS ON PIGM, ELSEVIER, AMSTERDAM, NL, vol. 2007, no. 2, 1 février 2007 (2007-02-01), pages 1-2, XP005935379, ISSN: 0969-6210
- Guanhong Chen ET AL: "Preparation of SiO2 coated Ce2S3 red pigment with improved thermal stability", JOURNAL OF RARE EARTHS, vol. 31, no. 9, 1 September 2013 (2013-09-01), pages 891-896, XP055692109, CN ISSN: 1002-0721, DOI: 10.1016/S1002-0721(12)60375-5
- LIU SHUN-GUO ET AL: "Enhanced high temperature oxidization resistance of silica coated[gamma]-Ce2S3red pigments", APPLIED SURFACE SCIENCE, ELSEVIER, AMSTERDAM, NL, vol. 387, 8 August 2016 (2016-08-08), pages 1147-1153, XP029679685, ISSN: 0169-4332, DOI: 10.1016/J.APSUSC.2016.07.046

## Description

### Domaine de l'invention

La présente invention s'applique au domaine des matériaux céramiques. Plus particulièrement, la présente invention s'applique au domaine des méthodes pour la réalisation de matériaux céramiques.

La présente invention vise un procédé de fabrication d'un matériau céramique de couleur rouge. L'invention vise également un matériau céramique susceptible d'être obtenu par ledit procédé ainsi que des produits d'horlogerie, de bijouterie ou de joaillerie comprenant un tel matériau céramique.

### Etat de l'art

Parmi les procédés de fabrication de matériaux céramiques, il est connu aujourd'hui d'utiliser des procédés de frittage de poudre.

Les techniques de frittage assisté sous champ électrique sont bien connues pour la densification et l'assemblage des nouveaux matériaux polymères, métaux et céramiques nanostructurés et nanocomposites. L'une de ces techniques appelée frittage flash ou « spark Plasma Sintering » (SPS) en terminologie anglo-saxone, la plus répandue de par le monde, s'apparente au pressage à chaud conventionnel, mais elle a la particularité d'utiliser des séries d'impulsions de courant électrique de forte intensité pour générer la chauffe d'outillages généralement conducteurs d'électricité (ex graphite, carbure, acier...) appliquant une pression uniaxiale sur un échantillon à densifier placé dans ledit outillage. L'application de ce courant permet le chauffage de l'échantillon par effet Joule. Soit l'échantillon est conducteur et le courant passe par l'échantillon, ce qui conduit à son chauffage direct. Soit l'échantillon est isolant et le courant passe alors par une matrice en graphite conductrice dans laquelle est au préalable placé l'échantillon, qui chauffe à son tour l'échantillon par conduction.

L'intérêt de cette technique est qu'elle permet de densifier les matériaux très rapidement en quelques dizaines de minutes.

Un appareil typique de frittage flash comprend classiquement une enceinte de frittage qui est en général sous vide (quelques Pascals), deux électrodes entre lesquelles est insérée une colonne généralement en graphite contenant les outillages et qui permettent conjointement d'appliquer le courant électrique et la pression uniaxiale à l'échantillon par l'intermédiaire des outillages. Les outillages sont réalisés en un matériau réfractaire et conducteur de l'électricité, ce matériau a de préférence un coefficient de dilatation inférieur à celui du matériau que l'on cherche à obtenir par frittage flash. L'outillage a des parois internes délimitant une cavité de forme complémentaire de celle de la pièce à réaliser en matériau ainsi fabriqué.

Dans les domaines de la bijouterie, de l'horlogerie et de la joaillerie, il est souvent utilisé des matériaux céramiques. Par exemple, certaines montres comportent un boitier en matériau céramique ou bien une autre partie telle que la carrure, le fond, la lunette, l'insert, la couronne, le bracelet, etc. De tels matériaux céramiques ont besoin de posséder une grande résistance mécanique, une faible densité (légèreté), une forte dureté, une grande rigidité, une résistance élevée à l'usure, à la fissuration, à la chaleur et aux agents chimiques, mais aussi d'être inerte et hypoallergéniques.

La plupart des pièces céramiques mises en œuvre aujourd'hui sont de couleur noire, blanche, bleue ou encore marron. Pour des raisons esthétiques, il serait intéressant de pouvoir disposer de matériaux céramiques de couleur rouge homogène.

La demande WO2011120181 divulgue une céramique rouge opaque à base d'alumine, similaire à du rubis et ayant ténacité élevée lui permettant d'être utilisée dans l'horlogerie, la bijouterie et la joaillerie, et qui comprend au moins un oxyde de métal et au moins un oxyde d'un élément du groupe des terres rares. Cette demande divulgue également un procédé de fabrication de cette céramique utilisant une étape de frittage d'un mélange de poudres comprenant une poudre d'alumine, au moins un oxyde de métal et au moins un oxyde d'un élément du groupe des terres rares.

Or, aujourd'hui il n'est pas connu de l'art antérieur de procédé rapide permettant d'obtenir de façon contrôlée des matériaux céramiques de couleur rouge homogène à base de sulfure de cérium et ayant des propriétés de dureté compatibles avec leur utilisation dans des domaines tels que ceux de la bijouterie, de l'horlogerie et de la joaillerie.

La présente invention vise à proposer un tel procédé, facile et rapide, permettant d'obtenir un produit en matériau céramique de couleur rouge homogène.

### Exposé de l'invention

À cet effet, selon un premier aspect, la présente invention vise un procédé de fabrication d'un matériau céramique selon la revendication 1.

De manière tout à fait avantageuse, il a été constaté par les présents inventeurs qu'un tel procédé permet d'obtenir un matériau céramique de couleur rouge homogène, dénué en particulier de tâches sombres nuisant à son aspect esthétique. Il permet en outre de contrôler avec précision la colorimétrie du matériau céramique formé. Les inventeurs ont en particulier constaté que de manière tout à fait surprenante, le pigment sulfure de cérium résiste, c'est-à-dire qu'il ne se dégrade pas, lorsqu'il est soumis à chauffage à une température comprise entre 950°C et 1150 °C sous vide, ce chauffage étant réalisé par la technique particulière de frittage flash, c'est-à-dire par des séries d'impulsions de courant électrique et ledit frittage comprenant en outre une étape préalable b₁/ de chauffage dudit mélange de poudres homogène suivant un profil de température à deux phases comme décrit ci-dessus. Ceci est d'autant plus surprenant que l'art antérieur connu de l'homme du métier montre que le pigment de sulfure de cérium s'oxyde et se dégrade lorsqu'il est chauffé à plus de 350 °C par les techniques de chauffage autres.

Bien entendu, lors de l'étape b1/ le chauffage est réalisé par impulsions de courant électrique.

On entend par « sous vide » pour le frittage flash, que l'enceinte dans laquelle est effectué ledit frittage est sous pression réduite, c'est-à-dire une pression plus précisément comprise entre 2 et 50 Pa préférentiellement entre 10 et 30 Pa.

Le réglage des conditions de frittage entre dans les compétences de l'homme du métier qui sait parfaitement, en fonction du matériau céramique mis en œuvre, en déterminer les conditions opératoires, en particulier la température, la durée, la compression, l'intensité du courant pulsé, etc., pour obtenir la densification finale souhaitée.

Suivant des modes de mise en œuvre préférés, l'invention répond en outre aux caractéristiques suivantes, mises en œuvre séparément ou en chacune de leurs combinaisons techniquement opérantes.

Dans un mode de réalisation, le frittage flash est réalisé jusqu'à obtenir une densification du mélange de poudres homogène comprise entre 90% et 100%, de préférence entre 95% et 100%, encore préférentiellement supérieure ou égale à 98%.

Dans un mode de mise en œuvre particulier, l'étape b/ de frittage flash comprend l'application sur ledit mélange de poudres homogène d'une pression uniaxiale dite de frittage comprise entre 25 et 130 MPa, de préférence entre 50 et 100 MPa.

Dans un mode de mise en œuvre particulier, le procédé comprend avant et/ou pendant l'étape préalable b₁/, une phase de montée en pression uniaxiale appliquée sur ledit mélange de poudres homogène d'une durée tₚ jusqu'à la pression uniaxiale de frittage. Par exemple, avant la première phase de montée en température, le procédé peut comprendre une phase de montée en pression uniaxiale d'une durée tₚ d'une minute à une température de 50°C, jusqu'à la pression uniaxiale de frittage.

Dans un mode de mise en œuvre particulier, la température de frittage est comprise entre 1000°C et 1050°C.

Dans un mode de mise en œuvre particulier, la température de frittage est maintenue pendant une troisième durée t₃ comprise entre une et dix minutes.

Dans un mode de mise en œuvre particulier, le procédé comprend après l'étape b/ de frittage, une phase de descente en température et en pression uniaxiale pendant une quatrième durée t₄, jusqu'à température ambiante et pression uniaxiale nulle. Selon un exemple de réalisation particulier, la durée t₄ est comprise entre une et dix minutes. De préférence, elle est de cinq minutes. La descente en température et en pression uniaxiale d'une telle quatrième durée t₄ est préconisée pour accommoder les contraintes dans la céramique et ainsi limiter les risques de fissuration.

Dans un mode de mise en œuvre particulier, la première durée t₁ est comprise entre cinq et dix minutes, et la deuxième durée t₂ est comprise entre une et trois minutes.

Dans un mode de mise en œuvre particulier, la première durée t₁ est de neuf minutes, la deuxième durée t₂ est de deux minutes, la température de frittage est de 1050°C, la pression uniaxiale de frittage est de 100 MPa et la troisième durée t₃ est de cinq minutes.

Dans un mode de mise en œuvre particulier, la première vitesse A est supérieure à 10°C/min et inférieure ou égale à 200°C/min, de préférence supérieure à 50°C/min et inférieure ou égale à 150°C/min, encore préférentiellement supérieure à 90°C/min et inférieure ou égale à 120°C/min. Dans un mode de réalisation la deuxième vitesse B est supérieure ou égale à 10°C/min et inférieure à 200°C/min, de préférence supérieure ou égale à 50°C/min et inférieure à 150°C/min, encore préférentiellement supérieure ou égale à 90°C/min et inférieure à 120°C/min.

Dans un mode de réalisation particulier, la première vitesse A est de 100°C/min et la deuxième vitesse B est de 50°C/min.

La céramique est choisie parmi la zircone, l'alumine et un mélange de zircone et alumine.

Dans un mode de réalisation particulier la céramique est de la zircone renforcée à l'alumine (ATZ ou « *Alumine Toughened Zirconia* » en terminologie anglo-saxonne).

Le mélange de poudres comprend un pourcentage massique de pigment Sulfure de Cérium compris entre 1% et 20%, de préférence entre 5% et 20%.

Dans un mode de réalisation particulier, le mélange de poudres comprend un pourcentage massique de pigment Sulfure de Cérium égal à 5%, 10% ou 20%.

Dans un mode de mise en œuvre particulier il est adjoint des ajouts de frittage, tels que de l'Al₂O₃, TiO₂, Y₂O₃, MgO, CaO, CeO₂, ... aux poudres durant l'étape a/ de mélange pour améliorer la frittabilité du mélange de poudres et/ou les propriétés mécaniques du produit en matériau céramique obtenu par le procédé objet de la présente invention.

Selon un deuxième aspect, la présente invention vise un matériau céramique de couleur rouge homogène obtenu par le procédé objet de la présente invention, ledit matériau céramique comportant une céramique choisie parmi la zircone, l'alumine et un mélange de zircone et d'alumine, et comportant en outre un pigment de Sulfure de Cérium, la colorimétrie du matériau céramique étant comprise entre 30 et 65 pour le paramètre L, de préférence entre 30 et 60 pour le paramètre L, entre 10 et 40 pour le paramètre a, et entre 0 et 35 pour le paramètre b, de préférence entre 0 et 20 pour le paramètre b, selon le système L*a*b* de la Commission internationale de l'éclairage, la dureté du matériau céramique étant comprise entre 1000 et 1500 Hv, de préférence entre 1200 et 1500 Hv, et la ténacité du matériau céramique étant comprise entre 4 et 10 MPa.m^{1/2}.

Une telle couleur rouge avec de telles propriétés de dureté et de ténacité n'avait jamais été atteinte auparavant pour des matériaux céramiques.

Enfin, selon un dernier aspect, la présente invention vise un produit du domaine de la bijouterie, de l'horlogerie ou de la joaillerie, comportant un matériau céramique de couleur rouge homogène selon la revendication 12.

### Présentation des figures

L'invention sera mieux comprise à la lecture de la description suivante, donnée à titre d'exemple nullement limitatif, et faite en se référant aux figures qui représentent :
- Figure 1 : Variation du paramètre température (1A) et du paramètre pression uniaxiale (1B) dans le temps suivant un mode de mise en en œuvre du procédé objet de l'invention.
- Figure 2 : Image visualisée au microscope électronique à balayages (MEB) d'un matériau céramique rouge à base de zircone obtenu par un mode de mise en œuvre de procédé objet de la présente invention.
- Figure 3 : Courbes d'évolution de la valeur des paramètres L*, a* et b* du matériau céramique obtenu par le procédé de la présente invention mis en œuvre avec de la zircone, réflexion spéculaire incluse (SCI ou « *Specular Component Included »* en terminologie anglo-saxonne), selon le système colorimétrique de la Commission Internationale de l'éclairage, en fonction du pourcentage massique de pigment Sulfure de Cérium présent dans le mélange de poudres homogène.
- Figure 4 : Image visualisée au MEB d'un matériau céramique à base d'ATZ obtenu par un mode de mise en œuvre du procédé objet de la présente invention.

### Description détaillée de l'invention

On note dès à présent que les figures ne sont pas à l'échelle.

De manière plus générale, la portée de la présente invention ne se limite pas aux modes de mise en œuvre et de réalisation décrits ci-dessus à titre d'exemples non limitatifs, mais s'étend au contraire à toutes les modifications à la portée de l'homme de l'art. Chaque caractéristique d'un mode de réalisation peut être mise en œuvre isolément ou combinée à toute autre caractéristique de tout autre mode de réalisation de manière avantageuse.

La présente invention vise selon un premier aspect un procédé de fabrication d'un produit en matériau céramique selon la revendication 1.

Le mélange de poudres doit être homogène, c'est-à-dire que la répartition des grains de poudre de pigment Sulfure de Cérium parmi les grains de poudre de céramique doit être homogène. Une telle homogénéité du mélange peut par exemple être obtenue par la mise en œuvre de l'étape a/ de mélange de la poudre céramique avec la poudre de pigment de Sulfure de Cérium pendant une durée d'au moins deux heures. Le mélange peut être réalisé à sec dans un mélangeur tel qu'un Turbula®, en voie humide par attrition ou par voie chimique.

L'étape b/ de frittage flash comprend l'application sur ledit mélange de poudres homogène d'une pression uniaxiale dite de frittage prédéterminée.

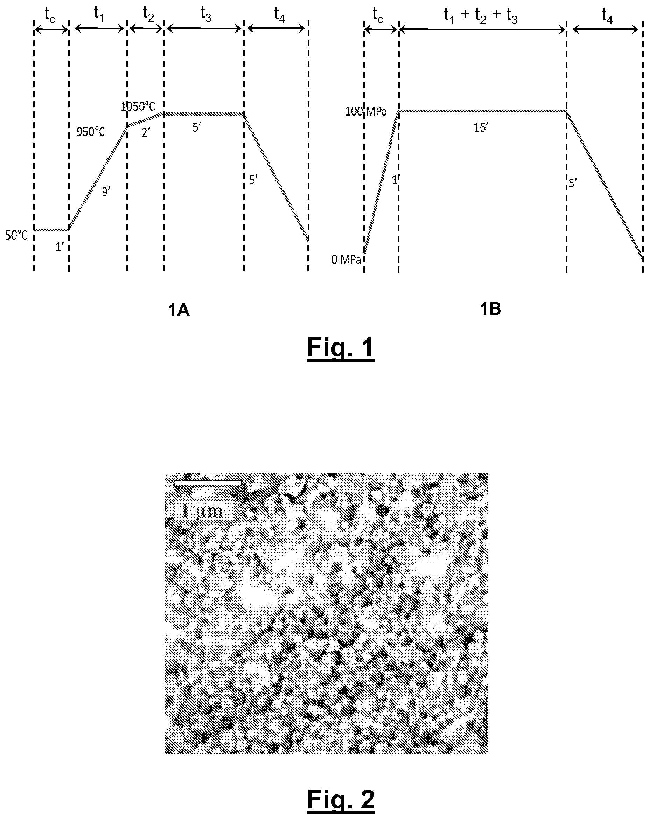

Dans le mode de réalisation particulier illustré en figure 1, l'étape b/ de frittage flash du mélange de poudres se fait à une pression uniaxiale de frittage de 100 MPa (figure 1B) et une température de frittage de 1050°C (figure 1A).

Le procédé comprend avant et/ou pendant l'étape préalable b₁/, une phase de montée en pression uniaxiale sur le mélange de poudres homogène d'une durée tₚ d'une minute jusqu'à la pression uniaxiale de frittage 100 MPa. Cette montée en pression uniaxiale s'effectue à une température de 50°C dans ce mode de réalisation.

On observe également dans ce mode de réalisation illustré en figure 1, une première phase de montée en température effectuée par impulsions de courant électrique à une première vitesse A de 100°C/min pendant une première durée t₁ de neuf minutes, et une deuxième phase de montée en température effectuée par impulsions de courant électrique à une deuxième vitesse B de 50°C/min pendant une deuxième durée t₂ de deux minutes. La température de frittage de 1050°C est atteinte en fin de deuxième phase et est maintenue pendant une troisième durée t₃ de cinq minutes. Comme illustrée en figure 1B, dans ce mode de réalisation la pression uniaxiale de frittage de 100 MPa est appliquée et maintenue durant la première, deuxième et troisième durée t₁, t₂ et t₃, c'est-à-dire pendant le frittage flash comprenant la durée t₃, mais également pendant l'étape préalable b₁/ comprenant les durées t₁ et t₂. Dans d'autres modes de réalisation particuliers, la pression uniaxiale de frittage est appliquée et maintenue seulement durant la durée t₃, c'est-à-dire seulement durant le frittage flash mais pas pendant l'étape préalable b₁/.

Le procédé comprend également après l'étape b/ de frittage flash, une phase de descente en température et en pression uniaxiale pendant une quatrième durée t₄ de cinq minutes jusqu'à température ambiante et pression uniaxiale nulle.

Le matériel utilisé pour réaliser le frittage flash est un appareil de frittage flash communément utilisé, comprenant une enceinte de frittage qui est sous vide, deux électrodes entre lesquelles est insérée une colonne en graphite contenant les outillages, lesdites électrodes permettant d'appliquer un courant électrique et les pistons une pression uniaxiale, à l'échantillon de mélange de poudres par l'intermédiaire des outillages. Le frittage flash étant bien connu de l'homme du métier, il apparait évident pour ce dernier que les séries d'impulsions de courant électrique sont des séries d'impulsions de courant électrique continu. Les outillages sont réalisés en un matériau réfractaire et conducteur du courant électrique, ce matériau ayant un coefficient de dilatation inférieur à celui du matériau céramique que l'on cherche à obtenir par frittage flash. Les outillages ont également des parois internes délimitant une cavité de forme complémentaire de celle de la pièce à réaliser en matériau céramique.

### EXEMPLES

### Exemple 1 : Fabrication d'un matériau céramique rouge à base de zircone.

La poudre céramique utilisée est de la poudre de zircone TZ3Y (zircone stabilisée 3% molaire d'yttrine). La taille des grains de la poudre de céramique est de 63± 8 nm.

La taille des grains de la poudre de Sulfure de Cérium est d'environ 200 nm ± 24 nm.

Différents mélanges de ces deux poudres de quantité finale égale à 15 g, sont réalisés :
- TZ3Y (contrôle) = Zircone TZ3Y + 0% massique de pigment Ce₂S₃ ;
- TZ3Y5 = Zircone TZ3Y + 5% massique de pigment Ce₂S₃ ;
- TZ3Y10 = Zircone TZ3Y + 10% massique de pigment Ce₂S₃ ;
- TZ3Y20 = Zircone TZ3Y + 20% massique de pigment Ce₂S₃.

Dans chaque mélange sont ajoutés 15 g de billes d'attrition. Chaque mélange de poudres est ensuite placé dans un mélangeur de type Turbula® pour être mélangé pendant deux heures, sans ajout de liant ou d'autres composés organiques.

Après l'étape de mélange, chacun des mélanges de poudres est placé séparément dans une matrice en graphite chemisée d'une feuille de graphite souple (par exemple de type Papyex® du fabricant MERSEN) pour assurer le contact électrique lors du frittage flash.

Pour éviter la pollution des mélanges de poudres par des résidus de feuilles de graphite souples, du graphite est déposé sous forme de spray à l'interface entre les pistons et les mélanges de poudres. L'objectif est de protéger l'outillage tout en limitant les réactions avec le mélange de poudres. Ce spray peut être à base de nitrure de bore.

Chaque matrice de graphite comprenant un mélange de poudres est placée dans l'appareil de frittage flash et la densification par frittage flash est réalisée selon les conditions opératoires exposées en figure 1 :
- montée en pression uniaxiale sur le mélange de poudres homogène d'une durée tₚ d'une minute jusqu'à la pression uniaxiale de frittage 100 MPa. Cette montée en pression uniaxiale s'effectue à une température de 50°C ;
- toujours à pression uniaxiale de 100 MPa, une première phase de montée en température est effectuée à une première vitesse A de 100°C/min pendant une première durée t₁ de neuf minutes, et une deuxième phase de montée en température est effectuée à une deuxième vitesse B de 50°C/min pendant une deuxième durée t₂ de deux minutes ;
- toujours à pression uniaxiale de 100 MPa, la température de frittage de 1050°C est atteinte en fin de deuxième phase et est maintenue pendant une troisième durée t₃ de cinq minutes ;
- descente en température et en pression uniaxiale pendant une quatrième durée t₄ de cinq minutes jusqu'à température ambiante et pression uniaxiale nulle.

Les différents matériaux céramiques obtenus sont alors polis à l'aide de cinq disques diamantés (grains 220, 500, 1200, 2000 et 4000) et d'un disque en feutre sur lequel une solution de silicate est déposée. L'ensemble de la feuille de graphite souple est enlevé grâce à une polisseuse automatique. Les matériaux céramiques obtenus sont examinés au microscope électronique à balayage. La figure 2 illustre une image visualisée au microscope électronique à balayage du matériau céramique rouge issue du mélange TZ3Y10.

**Tableau 1 : Évolution de la taille de grains après frittage flash pour le mélange de poudres TZ3Y10.**

| **Mélange de poudres** | **TZ3Y10** |
|---|---|
| **Composition** | **TZ3Y + 10% mass Ce₂S₃** |
| Taille de grain TZ3Y avant frittage (nm) | 63 ± 8 |
| Taille de grain TZ3Y après frittage (nm) | 115 ± 24 |

On observe une légère croissance des grains mais qui restent de tailles nanométriques (Tableau 1). Les trois raisons importantes sont : la température de frittage qui est faible (inférieure à 1200°C), la pression uniaxiale appliquée lors du frittage qui abaisse les températures de réaction et la durée t₃ de frittage de cinq minutes.

**Tableau 2 : Caractérisations mécaniques des matériaux céramiques obtenus.**

| **Nomenclature** | Température de frittage (°C) | Taux de densification (%) | Dureté (Hv) | Dureté (GPa) | Tenacité (MPa.m1/2) |
|---|---|---|---|---|---|
| **TZ3Y** | 1050 | 99 % | 1487 | 14,58 ±0,10 | / |
| **TZ3Y5** | 1050 | 99 % | 1472 | 14,44 ±0,30 | 6,21 ±0,54 |
| **TZ3Y10** | 1050 | 99 % | 1332 | 13,06 ±0,19 | 5,41 ±0,40 |
| **TZ3Y20** | 1050 | 98% | 1224 | 12,00 ±0,22 | 4,87 ±0,33 |

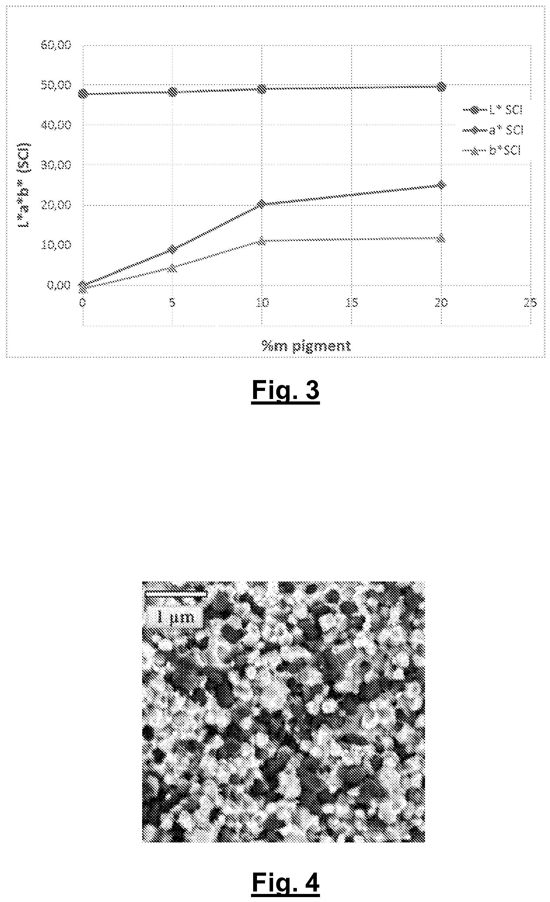

Des analyses de densité par la méthode d'Archimède à l'aide d'une balance hydrostatique, de dureté Vickers, et de ténacité par micro-indentation Vickers ont montré que les matériaux céramiques obtenus selon le procédé de la présente invention présentent un taux de densification supérieur ou égal à 98%, une dureté comprise entre 1220 et 1490 Hv, et une ténacité comprise entre 4,5 et 6,8 MPa.m^{1/2} (Tableau 2). L'évolution des paramètres de colorimétrie L*, a* et b* des matériaux céramiques obtenus par le procédé de la présente invention mis en œuvre avec de la zircone, réflexion spéculaire incluse (SCI ou « *Specular Comportent Included »* en terminologie anglo-saxonne), selon le système colorimétrique de la Commission Internationale de l'éclairage, en fonction du pourcentage massique de pigment Sulfure de Cérium présent dans le mélange de poudres, est illustrée par les courbes en figure 3.

On constate que pour le mélange de poudres TZ3Y5 on obtient une colorimétrie de paramètres L*a*b* de 48/9/5, pour le mélange de poudre TZ3Y10 on obtient une colorimétrie de paramètres L*a*b* de 49/20/11 et, pour le mélange de poudres TZ3Y20 on obtient une colorimétrie de paramètres L*a*b* de 50/25/12. La poudre de zircone TZ3Y seule donne un matériau dont la colorimétrie est de paramètres L*a*b* de 48/1/0.

### Exemple 2: Fabrication d'un matériau céramique rouge à base de zircone renforcée à l'alumine.

La poudre céramique utilisée est de la poudre de la zircone renforcée à l'alumine (ATZ-20/80, 150 nm alpha alumine/20 nm zircone stabilisée 2,5% molaire). La taille des grains de la poudre de céramique est comprise entre 80 µm à 100 µm.

La taille des grains de la poudre de Sulfure de Cérium est d'environ 200 nm ± 24 nm.

Différents mélanges de ces deux poudres de quantité finale égale à 15 g, sont réalisés :
- ATZ (contrôle) = ATZ + 0% massique de pigment Ce₂S₃ ;
- ATZ10 = ATZ+ 10% massique de pigment Ce₂S₃ ;

Dans chaque mélange sont ajoutés 15 g de billes d'attrition. Chaque mélange de poudres est ensuite placé dans un mélangeur de type Turbula® pour être mélangé pendant deux heures, sans ajout de liant ou d'autres composés organiques.

Après l'étape de mélange, chacun des mélanges de poudres est placé séparément dans une matrice en graphite chemisée d'une feuille de graphite souple (par exemple de type Papyex® du fabricant MERSEN) pour assurer le contact électrique lors du frittage flash.

Comme dans l'exemple 1, du graphite est déposé sous forme de spray à l'interface entre les pistons et les mélanges de poudres.

Chaque matrice de graphite comprenant un mélange de poudres est placée dans l'appareil de frittage flash et la densification par frittage flash est réalisée dans les conditions opératoires exposées en figure 1 et citées dans l'exemple 1.

Les différents matériaux céramiques obtenus sont alors polis de la même manière qu'exposé en exemple 1. L'ensemble de la feuille de graphite souple est aussi enlevé et les matériaux céramiques obtenus sont examinés au microscope électronique à balayages. La figure 4 illustre une image visualisée au microscope électronique à balayages du matériau céramique rouge issue du mélange ATZ10.

**Tableau 3 : Évolution de la taille de grains après frittage flash pour le mélange de poudres ATZ10.**

| **Echantillons** | **ATZ10** | |
|---|---|---|
| **Phase** | **Alumine** | **Zircone yttriée** |
| Taille de grain avant frittage (nm) | 272 ± 89 | 36 ± 8 |
| Taille de grain après frittage (nm) | 262 ± 78 | 264 ± 34 |

On observe une certaine croissance des grains de zircone (x7) mais qui restent de tailles submicroniques (Tableau 3).

**Tableau 4 : Caractérisations mécaniques des matériaux céramiques obtenus.**

| **Nomenclature** | Température de frittage (°C) | Taux de densification (%) | Dureté (Hv) | Dureté (GPa) | Tenacité (MPa.ml/2) |
|---|---|---|---|---|---|
| **ATZ** | 1050 | 95 % | 1391 | 13,64 ±0,53 | / |
| **ATZ10** | 1050 | 98% | 1442 | 14.14 ±0,27 | 7,43 ±0,66 |

Les analyses de densité par la méthode d'Archimède à l'aide d'une balance hydrostatique, de dureté Vickers, et de ténacité par micro-indentation Vickers, ont montré que les matériaux céramiques obtenus selon le procédé de la présente invention présentent un taux de densification supérieur ou égal à 98%, une dureté proche de 1442 Hv, et une ténacité comprise entre 6 et 8 MPa.m^{1/2} (Tableau 4).

On constate que pour le mélange de poudres ATZ10 on obtient une colorimétrie de paramètres L*a*b* de 61,0/13,9/33,4.

### Exemple 3: Fabrication d'un matériau céramique rouge à base d'alumine.

La poudre céramique utilisée est de la poudre d'alumine dont la taille des grains est d'environ 150nm.

La taille des grains de la poudre de Sulfure de Cérium est d'environ 200 nm.

Différents mélanges de ces deux poudres de quantité finale égale à 15 g, sont réalisés :
- AA (contrôle) = Alumine + 0% massique de pigment Ce₂S₃ ;
- AA10 = Alumine + 10% massique de pigment Ce₂S₃ ;
- AA20 = Alumine + 20% massique de pigment Ce₂S₃ ;

Comme pour les exemples précédents, dans chaque mélange sont ajoutés 15 g de billes d'attrition. Chaque mélange de poudres est ensuite placé dans un mélangeur de type Turbula® pour être mélangé pendant deux heures, sans ajout de liant ou d'autres composés organiques.

Après l'étape de mélange, chacun des mélanges de poudres est placé séparément dans une matrice en graphite chemisée d'une feuille de graphite souple (par exemple de type Papyex® du fabricant MERSEN) pour assurer le contact électrique lors du frittage flash.Du graphite est également déposé sous forme de spray à l'interface entre les pistons et les mélanges de poudres.

Chaque matrice de graphite comprenant un mélange de poudres est placée dans l'appareil de frittage flash et un frittage flash est réalisé dans les conditions opératoires exposées en figure 1 et citées dans l'exemple 1.

On constate que pour le mélange de poudres AA10 et AA20 on obtient une colorimétrie de paramètres L*a*b* de 57,3/29,1/26,5 et 50,1/35,5/30,3 respectivement.

## Revendications

1. Procédé de fabrication d'un produit en matériau céramique de couleur rouge pour le domaine de la bijouterie, de l'horlogerie ou de la joaillerie **caractérisé en ce qu'**il comporte les étapes suivantes de :
a/- mélange d'une poudre céramique choisie parmi la zircone, l'alumine et un mélange de zircone et alumine, avec une poudre de pigment Sulfure de Cérium de sorte à obtenir un mélange de poudres homogène comprenant un pourcentage massique de pigment Sulfure de Cérium compris entre 1% et 20% ;
b/- frittage flash par chauffage par impulsions de courant électrique du mélange de poudres homogène sous vide pour densifier ledit mélange, ledit frittage flash étant réalisé à une température dite de frittage prédéterminée comprise entre 950°C et 1150°C et comportant une étape préalable bi/ de chauffage dudit mélange de poudres homogène suivant un profil de température comprenant :
∘ une première phase de montée en température à une première vitesse A pendant une première durée t₁,
∘ et une deuxième phase de montée en température à une deuxième vitesse B inférieure à la première vitesse A pendant une deuxième durée t₂, jusqu'à atteindre la température de frittage.

2. Procédé de fabrication selon la revendication 1, dans lequel l'étape b/ de frittage flash comprend l'application sur ledit mélange de poudres homogène d'une pression uniaxiale dite de frittage prédéterminée comprise entre 25 et 130 MPa, de préférence entre 50 et 100 MPa.

3. Procédé selon la revendication 2, comprenant avant et/ou pendant l'étape préalable b₁/, une phase de montée en pression uniaxiale appliquée sur ledit mélange de poudres homogène, d'une durée tₚ, jusqu'à la pression uniaxiale de frittage.

4. Procédé selon l'une quelconque des revendications 1 à 3, dans lequel la température de frittage est comprise entre 1000°C et 1050°C.

5. Procédé selon l'une quelconque des revendications 1 à 4, dans lequel la température de frittage est maintenue pendant une troisième durée t₃ comprise entre une et dix minutes.

6. Procédé selon l'une quelconque des revendications 1 à 5, comprenant après l'étape b/ de frittage, une phase de descente en température et en pression uniaxiale jusqu'à température ambiante et pression uniaxiale nulle, pendant une quatrième durée t₄ comprise entre une et dix minutes, de préférence étant de cinq minutes.

7. Procédé selon l'une quelconque des revendications 1 à 6, dans lequel la première durée t₁ est comprise entre cinq et dix minutes, et la deuxième durée t₂ est comprise entre une et trois minutes.

8. Procédé de fabrication selon l'une quelconque des revendications 1 à 7, dans lequel la première vitesse A est de 100°C/min et la deuxième vitesse B est de 50°C/min.

9. Procédé selon l'une quelconque des revendications 1 à 8, dans lequel la céramique est de la zircone renforcée à l'alumine (ATZ).

10. Procédé de fabrication selon l'une quelconque des revendications 1 à 9, dans lequel le mélange de poudres comprend un pourcentage massique de pigment Sulfure de Cérium compris entre 5 et 20%.

11. Procédé de fabrication selon l'une quelconque des revendications 1 à 10, dans lequel le mélange de poudres comprend un pourcentage massique de pigment Sulfure de Cérium égal à 5%, 10% ou 20%.

12. Matériau céramique de couleur rouge homogène obtenu par un procédé selon l'une quelconque des revendications 1 à 11, comportant une céramique choisie parmi la zircone, l'alumine et un mélange de zircone et d'alumine, et comportant en outre un pigment de Sulfure de Cérium, la colorimétrie du matériau céramique étant comprise entre 30 et 65 pour le paramètre L, de préférence entre 30 et 60 pour le paramètre L, entre 10 et 40 pour le paramètre a, et entre 0 et 35 pour le paramètre b, de préférence entre 0 et 20 pour le paramètre b, selon le système L*a*b* de la Commission internationale de l'éclairage, la dureté du matériau étant comprise entre 1000 et 1500 Hv, de préférence entre 1200 et 1500 Hv, et la ténacité du matériau céramique étant comprise entre 4 et 10 MPa.m^{1/2}.

13. Produit du domaine de la bijouterie, de l'horlogerie ou de la joaillerie comportant un matériau céramique de couleur rouge homogène selon la revendication 12.

## Patentansprüche

1. Verfahren zur Herstellung eines Produkts aus Keramikmaterial von roter Farbe für die Schmuck-, Uhren- oder Juwelierbranche, **dadurch gekennzeichnet, dass** es die folgenden Schritte umfasst:
a/- Mischen eines Keramikpulvers, das aus Zirkonoxid, Aluminiumoxid und einem Gemisch von Zirkonoxid und Aluminiumoxid ausgewählt ist, mit einem Cersulfid-Pigmentpulver, um ein homogenes Pulvergemisch zu erhalten, das einen Massenprozentanteil an Cersulfid-Pigment umfasst, der zwischen 1 % und 20 % liegt;
b/- Flash-Sintern des homogenen Pulvergemischs durch Erhitzen durch elektrische Stromimpulse unter Vakuum, um das Gemisch zu verdichten, wobei das Flash-Sintern bei einer vorherbestimmten, so genannten Sintertemperatur durchgeführt wird, die zwischen 950 °C und 1150 °C liegt, und einen Vorabschritt b₁/ des Erhitzens des homogenen Pulvergemischs gemäß einem Temperaturprofil umfasst, umfassend:
∘ eine erste Phase der Erhöhung der Temperatur mit einer ersten Geschwindigkeit A für eine erste Dauer t₁
∘ und eine zweite Phase der Erhöhung der Temperatur mit einer zweiten Geschwindigkeit B, die geringer als die erste Geschwindigkeit A ist, für eine zweite Dauer t₂, bis die Sintertemperatur erreicht wird.

2. Herstellungsverfahren nach Anspruch 1, wobei der Schritt b/ des Flash-Sinterns die Anwendung eines vorherbestimmten, so genannten uniaxialen Drucks, der zwischen 25 und 130 MPa, vorzugsweise zwischen 50 und 100 MPa liegt, auf das homogene Pulvergemisch umfasst.

3. Herstellungsverfahren nach Anspruch 2, umfassend vor und/oder während dem Vorabschritt b₁/ eine Phase der Erhöhung des uniaxialen Drucks auf das homogene Pulvergemisch mit einer Dauer tₚ bis zum uniaxialen Sinterdruck.

4. Verfahren nach einem der Ansprüche 1 bis 3, wobei die Sintertemperatur zwischen 1000 °C und 1050 °C liegt.

5. Verfahren nach einem der Ansprüche 1 bis 4, wobei die Sintertemperatur für eine dritte Dauer t₃, die zwischen einer und drei Minuten liegt, aufrechterhalten wird.

6. Verfahren nach einem der Ansprüche 1 bis 5, umfassend nach dem Schritt b/ des Sinterns eine Phase der Senkung der Temperatur und des uniaxialen Drucks bis zu einer Umgebungstemperatur und einem uniaxialen Nulldruck für eine vierte Dauer t₄, die zwischen einer und zehn Minuten liegt, vorzugsweise fünf Minuten beträgt.

7. Verfahren nach einem der Ansprüche 1 bis 6, wobei die erste Dauer t₁ zwischen fünf und zehn Minuten liegt und die zweite Dauer t₂ zwischen einer und drei Minuten liegt.

8. Herstellungsverfahren nach einem der Ansprüche 1 bis 7, wobei die erste Geschwindigkeit A 100 °C/min beträgt und die zweite Geschwindigkeit B 50 °C/min beträgt.

9. Verfahren nach einem der Ansprüche 1 bis 8, wobei die Keramik mit Aluminiumoxid verstärktes Zirkonoxid (ATZ) ist.

10. Herstellungsverfahren nach einem der Ansprüche 1 bis 9, wobei das Pulvergemisch einen Massenprozentanteil an Cersulfid-Pigment umfasst, der zwischen 5 und 20 % liegt.

11. Herstellungsverfahren nach einem der Ansprüche 1 bis 10, wobei das Pulvergemisch einen Massenprozentanteil an Cersulfid-Pigment umfasst, der gleich 5 %, 10 % oder 20 % beträgt.

12. Homogenes Keramikmaterial von roter Farbe, das durch ein Verfahren nach einem der Ansprüche 1 bis 11 erhalten wird, umfassend eine Keramik, die aus Zirkonoxid, Aluminiumoxid und einem Gemisch von Zirkonoxid und Aluminiumoxid ausgewählt ist, und außerdem umfassend ein Cersulfid-Pigment, wobei die Kolorimetrie des Keramikmaterials gemäß dem System L*a*b* der Internationalen Beleuchtungskommission zwischen 30 und 65 für den Parameter L, vorzugsweise zwischen 30 und 60 für den Parameter L, zwischen 10 und 40 für den Parameter a und zwischen 0 und 35 für den Parameter b liegt, die Härte des Materials zwischen 1000 und 1500 HV, vorzugsweise zwischen 1200 und 1500 HV liegt und die Zähigkeit des Keramikmaterials zwischen 4 und 10 MPa.m^{1/2} liegt.

13. Produkt der Schmuck-, Uhren- oder Juwelierbranche, umfassend ein homogenes Keramikmaterial von roter Farbe nach Anspruch 12.

## Claims

1. Method for manufacturing a product made from red ceramic material for the bijouterie, horology or jewellery field, **characterised in that** it includes the following steps:
a) mixing a ceramic powder chosen from zirconia, alumina and a mixture of zirconia and alumina, with a cerium sulphide pigment powder so as to obtain a homogeneous mixture of powders comprising a percentage by mass of cerium sulphide pigment of between 1% and 20%;
b) flash sintering, by heating by electric-current pulses, of the homogeneous mixture of powders under vacuum in order to densify said mixture, said flash sintering being performed at a predetermined so-called sintering temperature of between 950°C and 1150°C and including a prior step b₁) of heating said homogeneous mixture of powders in accordance with a temperature profile comprising:
• a first temperature-rise phase at a first rate A for a first length of time t₁,
• and a second temperature-rise phase at a second rate B lower than the first rate A for a second period of time t₂, until the sintering temperature is reached.

2. Manufacturing method according to claim 1, wherein the flash sintering step b) comprises the application, to said homogeneous mixture of powders, of a predetermined so-called sintering uniaxial pressure of between 25 and 130 MPa, preferably between 50 and 100 MPa.

3. Method according to claim 2, comprising, before and/or during the prior step b₁), a uniaxial pressure rise phase applied to said homogeneous mixture of powders, of a length of time tₚ, up to the uniaxial sintering pressure.

4. Method according to any one of claims 1 to 3, wherein the sintering temperature is between 1000°C and 1050°C.

5. Method according to any one of claims 1 to 4, wherein the sintering temperature is maintained for a third period of time t₃ of between one and ten minutes.

6. Method according to any one of claims 1 to 5, comprising, after the sintering step b), a temperature and uniaxial-pressure drop phase to ambient temperature and zero uniaxial pressure, for a fourth period of time t₄ of between one and ten minutes, preferably being five minutes.

7. Method according to any one of claims 1 to 6, wherein the first period of time t₁ is between five and ten minutes, and the second period of time t₂ is between one and three minutes.

8. Manufacturing method according to any one of claims 1 to 7, wherein the first rate A is 100°C/min and the second rate B is 50°C/min.

9. Method according to any one of claims 1 to 8, wherein the ceramic is alumina-toughened zirconia (ATZ).

10. Manufacturing method according to any one of claims 1 to 9, wherein the mixture of powders comprises a percentage by mass of cerium sulphide pigment of between 5% and 20%.

11. Manufacturing method according to any one of claims 1 to 10, wherein the mixture of powders comprises a percentage by mass of cerium sulphide pigment equal to 5%, 10% or 20%.

12. Homogeneous red ceramic material obtained by a method according to any one of claims 1 to 11, including a ceramic chosen from zirconia, alumina and a mixture of zirconia and alumina, and further including a cerium sulphide pigment, the colorimetry of the ceramic material being between 30 and 65 for the parameter L, preferably between 30 and 60 for the parameter L, between 10 and 40 for the parameter a, and between 0 and 35 for the parameter b, preferably between 0 and 20 for the parameter b, according to the L*a*b* system of the International Commission on Illumination, the hardness of the material being between 1000 and 1500 Hv, preferably between 1200 and 1500 Hv, and the toughness of the ceramic material being between 4 and 10 MPa.m^{1/2}.

13. Product in the bijouterie, horology or jewellery field including a homogeneous red ceramic material according to claim 12.
